**Europäisches Patentamt**

**European Patent Office**

**Office européen des brevets**

(19)

(11) Numéro de publication : **0 296 972 B1**

(12)

# FASCICULE DE BREVET EUROPEEN

(45) Date de publication du fascicule du brevet :
**12.08.92 Bulletin 92/33**

(51) Int. Cl.⁵ : **C22F 1/18,** C22C 16/00,
G21C 3/06

(21) Numéro de dépôt : **88401573.6**

(22) Date de dépôt : **22.06.88**

(54) **Procédé de fabrication d'un tube en alliage à base de zirconium pour réacteur nucléaire et applications.**

(30) Priorité : **23.06.87 FR 8708814**

(43) Date de publication de la demande :
**28.12.88 Bulletin 88/52**

(45) Mention de la délivrance du brevet :
**12.08.92 Bulletin 92/33**

(84) Etats contractants désignés :
**BE DE ES FR GB IT SE**

(56) Documents cités :
**EP-A- 0 098 996
EP-A- 0 213 771
DE-A- 2 008 320
DE-A- 2 651 870
DE-A- 2 951 096
DE-A- 2 951 102
FR-A- 2 368 547
US-A- 4 238 251**

(73) Titulaire : **FRAMATOME
Tour Fiat 1, Place de la Coupole
F-92400 Courbevoie (FR)**
(84) **BE DE ES FR GB IT SE**

Titulaire : **COMMISSARIAT A L'ENERGIE
ATOMIQUE
29-31, rue de la Fédération
F-75015 Paris (FR)**
(84) **BE DE ES FR SE**
Titulaire : **S.N.C. URANIUM PECHINEY ET
FRAMATOME, DITE ZIRCOTUBE
Tour Manhattan La Défense, 6, Place de l'Iris
F-92400 Courbevoie (FR)**
(84) **BE DE ES FR GB IT SE**

(72) Inventeur : **Mardon, Jean Paul
27A, rue Lassagne
F-69300 Caluire (FR)**
Inventeur : **Decours, Jacques
3, rue de la Gratelle
F-91290 Arpajon (FR)**
Inventeur : **Weisz, Michel
Rue Saint Jean de Beauregard
F-91940 Gometz-le-Chatel (FR)**
Inventeur : **Pelchat, Jacques
3, rue de la Prairie
F-92160 Antony (FR)**
Inventeur : **Le Pape, Jean
8, Chemin de la Marine
F-44250 Saint Brevin (FR)**

(74) Mandataire : **Fort, Jacques et al
CABINET PLASSERAUD 84, rue d'Amsterdam
F-75009 Paris (FR)**

EP 0 296 972 B1

Jouve, 18, rue Saint-Denis, 75001 PARIS

## Description

La présente invention concerne un procédé de fabrication d'un tube en alliage à base de zirconium pour gaine d'élément combustible destiné à être utilisé dans un réacteur nucléaire, comprenant plusieurs passes de laminage et de recuit successifs.

Elle trouve une application particulièrement importante, bien que non exclusive, dans le domaine de la fabrication de gaines d'éléments d'assemblages combustibles pour réacteur nucléaire à eau sous pression, dits PWR, gaines réalisées en alliage à base de zirconium.

Parmi les alliages les plus communément utilisés figurent notamment les alliages dits "Zircaloy" dont le Zircaloy 2 et le Zircaloy 4 de compositions conformes au tableau I ci-après :

### T A B L E A U   I

| | Elément | % en poids | | |
|---|---|---|---|---|
| Zircaloy 2 | Sn | 1,2 | - | 1,7 |
| | Fe | 0,07 | - | 0,20 |
| | Cr | 0,05 | - | 0,15 |
| | Ni | 0,03 | - | 0,08 |
| | Zr | complément | | |
| | + impuretés | | | |
| Zircaloy 4 | Sn | 1,2 | - | 1,7 |
| | Fe | 0,18 | - | 0,24 |
| | Cr | 0,07 | - | 0,13 |
| | Zr | complément | | |
| | + impuretés | | | |

Ces alliages, peu neutrophages, présentent de façon générale une tenue mécanique acceptable et une bonne résistance à la corrosion sous irradiation.

Il est néanmoins important de pouvoir améliorer ces qualités si l'on veut conserver plus longtemps le combustible dans le réacteur (augmentation du taux de combustion) et réduire encore les risques de fissuration des gaines de combustible. Pour ce faire, on a préconisé différents traitements thermiques à appliquer aux tubes lors de leur fabrication.

De façon connue, les tubes en Zircaloy utilisés pour les gaines de combustible, mais aussi pour les tubes guide de sonde ou de grappe d'éléments de contrôle des réacteurs nucléaires, sont fabriqués à partir de lingots travaillés à chaud.

Une première étape consiste habituellement à forger le lingot à une température située dans un premier domaine dit "domaine α" avant de le chauffer à une autre température comprise dans un deuxième domaine de température dit "domaine β", puis à réaliser un refroidissement rapide à l'eau du lingot pour le ramener à la température ambiante. On effectue ensuite l'extrusion de la billette dans le domaine α avant les opérations de laminage à froid proprement dites. Plusieurs passes de laminage et de recuits successifs dans le domaine α sont alors classiquement réalisées.

Par "domaine α" il faut entendre la plage de température dans laquelle la structure cristalline de l'alliage constitue un réseau hexagonal compact (phase α), et par "domaine β" la plage de température dans laquelle la structure cristalline de l'alliage constitue un réseau cubique centré (phase β).

La température de passage de la phase α en phase β du zirconium pur est 862°C.

Dans les alliages à base de zirconium, il existe en fait un domaine intermédiaire, où les deux structures cristallines α et β sont présentes. Ce domaine où l'alliage est en phase dite α + β, s'étend dans la plage de température entre 825°C et 950°C.

On a cherché de multiples façons à améliorer le procédé de fabrication décrit ci-dessus. Cela s'est fait, par exemple, en précisant les conditions dans lesquelles s'effectue la trempe à partir de la phase β (FR-2 244 831) ou encore en effectuant avant la dernière passe de laminage un passage en phase β (U.S. 3 865 635) avec pour résultat revendiqué une meilleure résistance au fluage.

Dans tous les cas, un traitement final du tube est effectué par recuit de détente ou de recristallisation en phase α. Ce traitement a été considéré jusqu'à ce jour comme nécessaire par l'homme de l'art pour obtenir un alliage présentant, sous irradiation, à la fois une bonne tenue à la corrosion généralisée ou sous contrainte, et des caractéristiques mécaniques acceptables.

Il est vrai cependant qu'on connait également des procédés de fabrication de tubes ou d'éléments structuraux pour réacteur nucléaire dans lesquels un traitement thermique final est appliqué dans le domaine béta auxdits tubes ou éléments de structure. Mais ces différents procédés ont tous pour but d'améliorer la tenue des surfaces de ces éléments de structure à la corrosion, dite "pustuleuse", afin d'éviter l'effritement des oxydes se déposant sur ces surfaces lors du fonctionnement, notamment en milieu propre aux réacteurs à eau bouillante.

C'est ainsi, qu'à titre d'exemple, les brevets US-4238251 ; DE-2951102 ou DE-2951096 concernent, par différents procédés (induction, laser), un traitement thermique final dans le domaine béta, de ces éléments de structure et, essentiellement, uniquement de la surface de ces éléments. Il est important de noter que ces traitements ne sont appliqués que sur des éléments de structure ou des parties d'éléments de structure qui ne sont pas en contact direct avec le combustible nucléaire et qui de ce fait ne sont pas soumises à une corrosion sous contrainte.

Bien au contraire, on remarquera que lorsque ces brevets citent l'application des procédés décrits au traitement des gaines, ils n'envisagent plus un traitement des tubes en phase béta mais un traitement en phase de transition alpha-béta (860-930°C) comme connu de l'art antérieur.

L'invention vise à fournir un procédé de fabrication de tube pour gaine d'élément combustible, en alliage de zirconium répondant mieux que ceux antérieurement connus aux exigences de la pratique, notamment en ce qu'il donne :

– une meilleure tenue à la corrosion généralisée sous irradiation du tube sur sa face externe,
– une meilleure tenue à la corrosion interne sous contrainte, et sous irradiation, d'une gaine tubulaire d'élément combustible, l'agent corrosif étant alors probablement l'iode issu des produits de fission,
– une meilleure résistance aux fluages radial, thermique et sous flux neutronique des tubes,
– une meilleure résistance au fluage axial,
– un plus faible agrandissement axial,
– la possibilité de conserver plus longtemps dans le coeur du réacteur des éléments combustibles dont les gaines restent étanches et résistantes plus longtemps sous irradiation.

Pour cela, l'invention part de la constatation que, lorsqu'on réalise sur un tube fabriqué selon l'art antérieur, un traitement final d'homogénéisation en phase β, suivi d'un refroidissement rapide à la température ambiante, il s'ensuit une nette amélioration de l'état métallurgique du gainage ayant les résultats favorables mentionnés ci-dessus. Ces résultats sont totalement inattendus.

En effet, on avait préféré, jusqu'à présent, finir la fabrication par un traitement soit en phase α, soit en phase α + β, pensant obtenir ainsi de meilleures caractéristiques mécaniques.

L'invention propose un procédé de fabrication d'un tube pour gaine d'élément combustible destiné à être utilisé dans un réacteur, en alliage à base de zirconium, suivant la revendication 1.

Dans un mode de réalisation préféré de l'invention, le traitement thermique d'homogénéisation en phase β est réalisé avantageusement à environ 1050°C. Le traitement thermique se fait par chauffage par induction.

Le procédé de fabrication selon l'invention trouve une application particulièrement avantageuse dans la fabrication d'une gaine d'élément d'assemblage combustible en alliages à base de zirconium pour réacteur nucléaire à eau sous pression.

L'alliage utilisé pour cette application est notamment du Zircaloy 4 dont les caractéristiques sont, en % en poids , de l'ordre de :

1,2 % à 1,7 % de Sn
0,18 % à 0,24 % de Fe
0,07 % à 0,13 % de Cr
avec un minimum de 0,28 % de Fe + Cr.
80 à 270 ppm de C et
900 à 1600 ppm de $O_2$
et le complément en Zr.

La gaine présentant en totalité une structure cristalline métallique homogène traitée en phase β est hautement résistante à la corrosion sous irradiation et à la corrosion sous contrainte par l'iode.

C'est ainsi que sous des conditions de traction rapide (500 micrometres/seconde) à la température ambiante, sous atmosphère iodée, on a constaté que la perte de ductilité d'une gaine obtenue selon l'art antérieur était de l'ordre de 60% alors qu'elle n'est que de 15% pour une gaine traitée en phase béta conformément à la présente invention.

De même, il a été constaté qu'une gaine, conforme à la présente invention, soumise pendant 240 heures, sous 130Mpa à une températue de 100°C, ne présentait qu'une déformation diamétrale inférieure à 0,1%, alors que cette déformation est de l'ordre de 1,5% pour les gaines obtenues selon les procédés de l'art antérieur.

L'expérience acquise du fait de l'emploi du matériau du type zircaloy 4 depuis de nombreuses années en réacteur fait qu'il est intéressant de rester dans les plages de cet alliage pour lesquelles les résultats d'essai sont nombreux. Mais les inventeurs ont estimé que l'application du procédé suivant l'invention était susceptible d'apporter des avantages variables suivant la composition exacte en élément dans l'alliage Zircaloy 4. En conséquence, ils ont recherché, en restant dans les domaines de composition du Zircaloy 4 une optimisation de la composition chimique. Effectivement, ils ont observé :

– qu'en soumettant des gaines à 400°C en phase vapeur la prise de poids en oxydes étaient respectivement de 32 mg/dm2 pour une gaine de l'art antérieur, de 29 mg/dm2 pour une gaine à basse teneur en étain mais soumise à un traitement thermique conforme à l'art antérieur, de 27 mg/dm2 pour la même gaine à basse teneur en étain mais soumise cette fois au traitement béta de la présente invention, on obtenait ainsi une meilleure tenue à la corrosion externe ;

– qu'ils obtenaient un moindre grandissement sous irradiation grâce à une augmentation du facteur de Kearns, relatif à la figure de pôle 0,02, dans la direction axiale, à savoir une augmentation de ce facteur de 0,07 à 0.25 se rapprochant ainsi de la valeur (0,33) correspondant à l'isotropie ;

pour des compositions chimiques telles que : (% en poids)

– la teneur en Sn est comprise entre 1,2 % et 1,5 % et est avantageusement de 1,35 %.

– la teneur en Cr est comprise entre 0,09 et 0,13 %.

– la somme des teneurs en Fe et Cr est supérieure à 0,30 %.

– la teneur en carbone est comprise entre 80 et 200 ppm et est avantageusement de l'ordre de 140ppm.

– la teneur en $O_2$ est comprise entre 1100 et 1500 ppm et est avantageusement de l'ordre de 1300 ppm.

Les tableaux II et III ci-après et les explications qui les accompagnent feront apparaître les avantages obtenus.

Le tableau II donne les résulats d' essais comparatifs sur une gaine de combustible de réacteur à eau sous pression ayant subi un traitement thermique selon l'invention comparée à un élément de gaine standard de l'art antérieur. Il montre les améliorations obtenues.

**T A B L E A U    II**

| | |
|---|---|
| Tenue à la corrosion externe | Réduction de 10% de l'épaisseur de la couche de $ZrO_2$ par rapport à une gaine standard, en réacteur à eau sous pression. |
| Tenue à la corrosion (sous contrainte/iode) | Perte de ductilité sous sollicitations transverses de la gaine, à température ambiante et en présence d'iode, de l'ordre d'un facteur 4 par rapport à un état détendu. |
| Fluage radial thermique | Pratiquement nul |
| Fluage radial sous flux | Nettement plus faible. (de l'ordre d'un facteur 5) |
| Grandissement axial | Inférieur à celui d'une gaine standard à l'état détendu en milieu réacteur à eau sous pression. |

Le tableau III donne les valeurs ou plages de valeurs des teneurs (% en poids) en Sn, Cr, Fe + Cr, C et $O_2$ du Zircaloy 4 pour lesquelles des résultats particulièrement interessants ont été obtenus avec un procédé selon l'invention.

Les résultats obtenus avec ces valeurs de composants sont comparés avec ceux obtenus pour des valeurs desdits composants comprises dans les plages restantes ou complémentaires du Zircaloy 4.

## T A B L E A U     III

| Elément | Fourchettes optimales | Valeurs optimales | Avantages |
|---|---|---|---|
| Sn % | 1,2 - 1,5 | 1,3 | meilleure tenue à la corrosion |
| Cr % | 0,09 - 0,13 | | " " |
| Fe+Cr % | 0,28 - 0,37 | >0,30 | " " |
| C ppm | 80 - 200 | 140 | minimise le grandissement sous irradiation du tube de gainage et optimise le fluage radial sous flux. |
| $O_2$ ppm | 1100 - 1500 | 1300 | minimise le grandissement sous irradiation du tube de gainage. |

On a décrit ci-après de façon plus détaillée un procédé de fabrication d'un tube selon l'invention.

Après réception des trexs en alliage à base de Zirconium du type des alliages décrits dans l'invention, on réalise éventuellement un dégraissage puis un décapage en bain fluonitrique avant d'effectuer une première passe de laminage à froid. Cette première passe est suivie des opérations suivantes :

– prénettoyage,

– ébavurage et mise en panier,

– dégraissage,

– décapage en bain fluonitrique, étuvage, et pesée,

– recuit sous vide et/ou en atmosphère inerte en phase α

et décapage en bain fluonitrique (si nécessaire).

On effectue ensuite une deuxième passe de laminage suivie des mêmes opérations, puis une troisième passe de laminage suivie des opérations de prénettoyage, ébavurage, dégraissage, décapage, étuvage et pesée du tube formé.

Une fois ces opérations effectuées, on réalise alors le traitement thermique final d'homogéneisation de l'ensemble du tube en phase β par chauffage par induction en continu, à une vitesse de défilement comprise entre 500mm/minute et 900mm/minute avantageusement de l'ordre de 700 mm/minute, à une température d'environ 1050°C, suivi d'un refroidissement rapide, compris entre 100°C/seconde et 150°C/seconde, avantageusement de l'ordre de 120°C/seconde, à la température ambiante sous atmosphère d'argon.

Après un dernier décapage en bain fluonitrique, si nécessaire, le tube est sablé intérieurement. Il est ensuite découpé à la longueur nécessaire pour former une gaine d'élément combustible. On réalise également le polissage mécanique de la surface externe, le décapage chimique de la surface interne, le dressage des faces du tube et la pesée du tube.

Enfin, on réalise les divers contrôles nécessaires [contrôles de santé (U.S., courant de Foucault), contrôles dimensionnels et de rectitude, etc...] avant le conditionnement final.

L'invention couvre notamment :

– la fabrication de gaines contenant un combustible fertile, comme gaines pour crayons de grappe de variation de spectre, destinés à être utilisées dans un réacteur à variation de spectre ;

– la fabrication de tubes comprenant de plus ou moins nombreuses passes de laminage et phases de recuits successifs.

## Revendications

1. Procédé de fabrication de tube pour gaine d'élément combustible destiné à être utilisé dans un réacteur nucléaire à eau en alliage à base de zirconium, caractérisé en ce qu'il comprend, après plusieurs passes de laminage à froid et de recuit successifs, une étape finale d'homogénéisation de l'ensemble du tube en phase β par chauffage du tube à une température comprise entre 950°C et 1250°C, maintien du tube à ladite température pendant une durée suffisante pour obtenir une structure en phase β homogène dans la totalité du tube et refroidissement du tube à une vitesse comprise entre 100°C et 150°C par seconde de façon à conserver la structure en phase β dans l'ensemble du tube.

2. Procédé selon la revendication 1, caractérisé en ce que le traitement thermique d'homogénéisation en phase β est à environ 1050°C.

3. Procédé selon la revendication 1 ou 2, caractérisé en ce que le traitement thermique en phase β s'effectue par chauffage à induction à une vitesse de défilement comprise entre 500 mm/minute et 900 mm/minute, avantageusement de l'ordre de 700 mm/minute et le refroidissement rapide s'effectue à de l'ordre de 120°C par seconde sous atmosphère d'argon.

4. Application du procédé selon l'une quelconque des revendications précédentes à la fabrication d'une gaine d'élément combustible en alliage à base de zirconium pour réacteur nucléaire à eau sous pression.

5. Application selon la revendication 4, caractérisée en ce que l'alliage à base de zirconium de la gaine contient en poids :

1,2 % à 1,7 % de Sn
0,18 % à 0,24 % de Fe
0,07 % à 0,13 % de Cr
avec un minimum de 0,28 % de Fe + Cr.
80 à 270 ppm de C et
900 à 1600 ppm de $O_2$.
et le complément en Zr.

6. Application selon la revendication 5, caractérisée en ce que la teneur en Sn est comprise entre 1,2% et 1,5%, en ce que la teneur en Cr est comprise entre 0,09 et 0,13% et en ce que la somme des teneurs en Fe et Cr est supérieure à 0,30%.

7. Application selon la revendication 5 ou 6, caractérisée en ce que la teneur en carbone est comprise entre 80 et 200 ppm et en ce que la teneur en $O_2$ est comprise entre 1100 et 1500 ppm.

8. Application selon la revendication 6, caractérisée en ce que la teneur en Sn est de 1,35%.

9. Application selon la revendication 6 ou 7, caractérisée en ce que la somme des teneurs en Fe et Cr est dans la plage de 0,32% à 0,33%.

10. Application selon la revendication 7, caractérisée en ce que la teneur en carbone est de l'ordre de 140 ppm et en ce que la teneur en $O_2$ est de l'ordre de 1300 ppm.


## Patentansprüche

1. Verfahren zur Herstellung eines Rohres als Hülle eines Brennelements, das zur Verwendung in einem Wasser-Kernkraftreaktor bestimmt ist, aus einer Legierung auf Zirkoniumbasis, dadurch gekennzeichnet, daß es nach mehreren Durchgängen von Kaltwalzen und jeweils nachfolgendem Anlassen eine Endhomogenisierungsstufe des Ganzen des Rohres in ß-Phase durch Erhitzen des Rohres auf eine Temperatur im Bereich von 950 °C bis 1250 °C, Halten des Rohres auf dieser Temperatur während einer ausreichenden Dauer zum Erhalten eines Gefüges in homogener ß-Phase in der Gesamtheit des Rohres und Abkühlung des Rohres mit einer Geschwindigkeit im Bereich von 100 °C bis 150 °C je Sekunde derart aufweist, um das Gefüge in ß-Phase im Ganzen des Rohres zu bewahren.

2. Verfahren nach dem Anspruch 1, dadurch gekennzeichnet, daß die Homogenisierungswärmebehandlung in ß-Phase bei etwa 1050 °C erfolgt.

3. Verfahren nach dem Anspruch 1 oder 2, dadurch gekennzeichnet, daß die Wärmebehandlung in β-Phase durch Induktionserhitzung mit einer Durchlaufgeschwindigkeit im Bereich von 500 mm/Minute bis 900 mm/Minute, vorzugsweise der Größenordnung von 700 mm/Minute, erfolgt und die rasche Abkühlung in der Größenordnung von 120 °C je Sekunde unter Argonatmosphäre erfolgt.

4. Anwendung des Verfahrens nach irgendeinem der vorstehenden Ansprüche für die Herstellung einer Brennelementhülle aus einer Legierung auf Zirkoniumbasis für einen Druckwasser-Kernkraftreaktor.

5. Anwendung nach dem Anspruch 4, dadurch gekennzeichnet, daß die Zirkoniumbasislegierung der Hülle gewichtsmäßig enthält:

1,2 % bis 1,7 % Sn,

0,18 % bis 0,24 % Fe,

0,07 % bis 0,13 % Cr mit einem Minimum von 0,28 % Fe + Cr,

80 bis 270 ppm C und

900 bis 1600 ppm $O_2$ und Rest Zr.

6. Anwendung nach dem Anspruch 5, dadurch gekennzeichnet, daß der Sn-Gehalt zwischen 1,2 % und 1,5 % liegt, daß der Cr-Gehalt zwischen 0,09 und 0,13 % liegt und daß die Summe der Gehalte an Fe und Cr über 0,30 % ist.

7. Anwendung nach dem Anspruch 5 oder 6, dadurch gekennzeichnet, daß der Kohlenstoffgehalt zwischen 80 und 200 ppm liegt und daß der $O_2$-Gehalt zwischen 1100 und 1500 ppm liegt.

8. Anwendung nach dem Anspruch 6, dadurch gekennzeichnet, daß der Sn-Gehalt 1,35 % ist.

9. Anwendung nach dem Anspruch 6 oder 7, dadurch gekennzeichnet, daß die Summe der Gehalte an Fe und Cr im Bereich von 0,32 % bis 0,33 % ist.

10. Anwendung nach dem Anspruch 7, dadurch gekennzeichnet, daß der Kohlenstoffgehalt in der Größenordnung von 140 ppm ist und daß der $O_2$-Gehalt in der Größenordnung von 1300 ppm ist.

## Claims

1. Method of manufacturing a tube for a sheath of a fuel element intended to be used in a water nuclear reactor, of zirconium-base alloy, characterized in that it comprises, after a plurality of successive sequences of cold rolling and annealing, a final step of homogeneization of the whole tube in β-phase by heating the tube to a temperature of between 950°C and 1250°C, maintaining said tube at said temperature for a time duration sufficient for obtaining a homogeneous β-phase structure within the whole tube and cooling the tube at a rate comprised between 100°C/s and 150°C/s for retaining the β-phase structure in the whole tube.

2. Method according to claim 1, characterized in that the β-phase homogeneization heat treatment is carried out at about 1050°C.

3. Method according to claim 1 or 2, characterized in that the β-phase heat treatment is carried out by induction heating at a travelling speed of from 500 mm/mn to 900 mm/mn, preferably of about 700 mm/mn, and the fast cooling is at about 120°C/s in an argon atmosphere.

4. Application of the process according to any one of the preceding claims to the manufacture of a fuel element sheath of zirconium-base alloy for pressurized water reactor.

5. Application according to claim 4, characterized in that the zirconium-base alloy of the sheath contains, by weight:

1.2 % to 1.7 % of Sn

0.18 % to 0.24 % of Fe

0.07 % to 0.13 % of Cr

with a minimum of 0.28 % of Fe + Cr

80 to 270 ppm of C and

900 to 1600 ppm of $O_2$

the balance being Zr.

6. Application according to claim 5, characterized in that the Sn content is of from 1.2% and 1.5%, in that the Cr content is comprised between 0.09 and 0.13% and in that the sum of the Fe and Cr contents is higher than 0.30%.

7. Application according to claim 5 or 6, characterized in that the carbon content is of from 80 to 200 ppm and in that the $O_2$ content is of from 1100 to 1500 ppm.

8. Application according to claim 6, characterized in that the Sn content is of 1,35%.

9. Application according to claim 6 or 7, characterized in that the sum of the Fe and Cr content is in the range of from 0.32 to 0.33%.

10. Application according to claim 7, characterized in that the carbon content is of about 140 ppm and in that the $O_2$ content is of about 1300 ppm.